# EUROPÄISCHE PATENTSCHRIFT

(11) **EP 4 226 064 B1**
(45) Veröffentlichungstag und Bekanntmachung des Hinweises auf die Patenterteilung: **03.09.2025**
(21) Anmeldenummer: 21786116.0
(22) Anmeldetag: 27.09.2021
(51) Int. Cl.: F16H 61/28, F16H 63/24, F16H 59/70, F16H 61/12

(54) **VERFAHREN ZUR ERMITTLUNG EINES MAGNETISCHEN STÖRFELDES**
METHOD FOR DETECTING A MAGNETIC INTERFERENCE FIELD
PROCÉDÉ DE DÉTECTION DE CHAMP D'INTERFÉRENCE MAGNÉTIQUE

(30) Priorität: 07.10.2020 DE 102020126169
(43) Veröffentlichungstag der Anmeldung: 16.08.2023
(73) Patentinhaber: ZF CV Systems Global GmbH, 3006 Bern (CH)
(72) Erfinder: REIMANN, Dennis, 30657 Hannover (DE); GROETZINGER, Stefan, 30989 Gehrden (DE); SOHN, Robert, 30559 Hannover (DE)
(74) Vertreter: Ohlendorf, Henrike
(86) Internationale Anmeldenummer: PCT/EP2021/076443
(87) Internationale Veröffentlichungsnummer: WO 2022/073779

(56) Entgegenhaltungen:
- EP-A1- 3 670 972
- WO-A1-2010/020472
- CN-A- 106 641 237
- DE-A1- 102004 052 797
- DE-A1- 102014 010 601

## Beschreibung

Die Erfindung betrifft ein Verfahren zur Ermittlung eines externen magnetischen Störfeldes in einem automatisierten Schaltgetriebe mittels einer Sensoranordnung.

In Vorgelegebauweise konzipierte Schaltgetriebe von Fahrzeugen weisen mindestens zwei achsparallele Getriebewellen auf, zum Beispiel eine Vorgelegewelle und eine Hauptwelle, die über mehrere Zahnradsätze mit unterschiedlichen Übersetzungen antriebswirksam miteinander koppelbar sind. Die Zahnradsätze umfassen mindestens ein auf der einen Getriebewelle drehfest angeordnetes Festrad und ein auf der anderen Getriebewelle drehbar gelagertes Losrad, die miteinander oder über einem Zwischenrad in Verzahnungseingriff sind. Die Festräder und die Losräder sind üblicherweise jeweils paarweise auf der einen oder der anderen Getriebewelle angeordnet. Zwischen den Losrädern von zwei benachbarten Zahnradsätzen ist jeweils eine Schaltmuffe mit beidseitig angeordneten Schaltverzahnungen drehfest und axial verschiebbar gelagert auf der betreffenden Getriebewelle angeordnet. Einer der in diesem Beispiel beiden Zahnradsätze wird dadurch geschaltet und damit die betreffende Übersetzungsstufe eingelegt, dass die Schaltmuffe axial in Richtung des Losrades des betreffenden Zahnradsatzes verschoben und damit eine Schaltverzahnung der Schaltmuffe in Eingriff mit einer entsprechenden Gegenverzahnung des Losrades gebracht wird. Das Lösen der Schaltung des Zahnradsatzes und damit das Auslegen der betreffenden Übersetzungsstufe erfolgt durch eine Axialverschiebung der Schaltmuffe in die Gegenrichtung bis in eine mittlere Neutralstellung. Die Schaltkupplungen der Zahnradsätze mit den Schalt- und Gegenverzahnungen können als unsynchronisierte Klauenkupplungen oder als reibsynchronisierte Synchronkupplungen ausgeführt sein.

Zur Schaltung der Zahnradstufen weist eine getriebeinterne Schaltvorrichtung üblicherweise mehrere achsparallel zu den genannten Getriebewellen angeordnete Schaltstangen und mehrere Schaltgabeln oder um jeweils eine Querachse schwenkbare gabelförmige Schaltschwingen auf, die jeweils in eine äußere Ringnut einer der Schaltmuffen eingreifen. Bei einem zweistufigen Schaltgetriebe, wie beispielsweise einer Splitgruppe oder einer Bereichsgruppe eines Gruppengetriebes, ist eine Schaltgabel starr mit einer zugeordneten Schaltstange verbunden oder eine Schaltschwinge dauerhaft mit einer zugeordneten Schaltstange formschlüssig gekoppelt. Bei einem Schaltgetriebe mit mehr als zwei Übersetzungsstufen, wie beispielsweise einem Hauptgetriebe eines Gruppengetriebes, können mehrere Schaltstangen vorgesehen sein, mit denen jeweils eine Schaltgabel starr verbunden ist oder eine Schaltschwinge in Stellverbindung steht.

Bei einem manuell schaltbaren Schaltgetriebe stehen die Schaltstangen über eine Gestänge- oder Seilzugvorrichtung mit einem in der Fahrerkabine eines Fahrzeugs angeordneten, von einem Fahrer manuell betätigbaren Schalthebel in Stellverbindung. Bei einem automatisiert schaltbaren Schaltgetriebe sind die Schaltstangen dagegen von einer elektronischen Getriebesteuereinheit veranlasst mittels zugeordneter Schaltaktuatoren axial verschiebbar. Hierzu ist die Ermittlung der jeweiligen Schaltposition beziehungsweise Wählposition der Schaltstangen mittels zugeordneter Wegsensoren sowie deren Übermittlung an die Getriebesteuereinheit erforderlich. Als Wegsensoren kommen bevorzugt Hallsensoren zum Einsatz, die im Vergleich zu anderen Sensorbauarten, wie optischen Sensoren oder Ultraschallsensoren, besonders störungsarm und robust gegen Umwelteinflüsse, wie Öl, Spritzwasser und Schmutzablagerungen, sind.

Aus der DE 10 2005 015 482 A1 ist eine Schaltvorrichtung eines automatisierten Schaltgetriebes mit vier achsparallel zueinander und zu einer Getriebewelle angeordneten Schaltstangen bekannt. Das Schaltgetriebe weist ein Hauptgetriebe mit vier Übersetzungsstufen, eine dem Hauptgetriebe vorgeschaltete zweistufige Splitgruppe und eine dem Hauptgetriebe nachgeschaltete zweistufige Bereichsgruppe auf. Der Splitgruppe und der Bereichsgruppe ist jeweils eine Schaltstange zugeordnet, durch deren Axialverschiebung zwischen den jeweils zwei Übersetzungsstufen der Splitgruppe oder der Bereichsgruppe umgeschaltet werden kann. Dem Hauptgetriebe sind zwei Schaltstangen zugeordnet, durch deren selektive Axialverschiebung in die eine oder andere Richtung jeweils zwischen zwei Schaltpositionen, in denen jeweils eine der beiden Übersetzungsstufen eingelegt ist, und einer zwischen diesen liegenden Neutralposition, in der beide Übersetzungsstufen ausgelegt sind, umgeschaltet werden. Zur Axialverschiebung der Schaltstangen sind vier Schaltaktuatoren vorhanden, welche als hydraulische oder pneumatische Kolben-Zylinder-Anordnungen ausgebildet sowie an einem axialen Ende der Schaltstangen in einem gemeinsamen Gehäuse angeordnet sind.

WO2010020472A1 **,** auf welchem die zweiteilige Anspruchsfassung basiert, offenbart ein Getriebe, insbesondere automatisiertes Schaltgetriebe eines Kraftfahrzeugs, mit mindestens einer Schaltgruppe, wobei die oder jede Schaltgruppe jeweils eine Schaltschiene umfasst, die eine mit einem Schaltelement, insbesondere mit einer Schaltmuffe, zusammenwirkende Schaltgabel der jeweiligen Schaltgruppe betätigt. EP3670972A1 offenbart eine Hydraulische Betätigungsvorrichtung für die Betätigung von Stellgliedern in einem Kraftfahrzeuggetriebe, mit einer Mehrzahl von Kolben-Zylinder-Anordnungen, die jeweils einen mit einem Stellglied wirkverbindbaren Stellkolben aufweisen. CN106641237A betrifft ein hydraulisches AMT-Gangschaltsystem mit mechanischer Positionierungsfunktion. Das System umfasst einen Ventilkörper. Im Ventilkörper sind mehrere Kolbenlöcher ausgebildet. In jedem Kolbenloch ist eine Gangschaltkolbenstange montiert und an jeder Gangschaltkolbenstange ist ein Gangschaltbetätigungsgriff angebracht.

Eine typische Ausbildung und Anordnung eines Wegsensors in einer Schaltvorrichtung eines Schaltgetriebes, der aus einem an einer Schaltstange befestigten, als Permanentmagnet ausgebildeten Signalgeber und einem in einem Gehäusedeckel angeordneten, als 3D-Hallsensor ausgebildeten Signalaufnehmer besteht, ist aus der DE2017002873A1 bekannt. Im Unterschied zu einem einfachen Hallsensor sind bei einem 3D-Hallsensor mindestens drei Hallsensoren mit einer Ausrichtung in jeweils einer anderen Raumrichtung auf einem elektronischen Chip angeordnet, wodurch das Magnetfeld des zugeordneten Permanentmagneten dreidimensional ermittelbar ist.

Gemäß der ISO-Norm 11452-8 sollen Hallsensoren eine Robustheit gegenüber magnetischen Störfeldern mit einer Stärke beziehungsweise magnetischen Flussdichte von bis zu 4 mT aufweisen. Unter normalen Einsatzbedingungen eines Fahrzeugs reicht dies aus, da das von einem Hallsensor erfasste Magnetfeld eines als Signalgeber verwendeten Permanentmagneten eine magnetische Flussdichte im Bereich von 20 mT bis 100 mT aufweist. Es gibt jedoch einige wenige Einsatzbereiche, bei denen ein Fahrzeug in den Bereich eines stärkeren externen magnetischen Störfeldes mit einer magnetische Flussdichte von bis zu 25 mT geraten kann, durch welches die sensorische Bestimmung der Schaltpositionen eines automatisierten Schaltgetriebes gestört wird. Eine solche Situation kann beispielsweise in Fabriken wie Aluminiumhütten entstehen, bei denen von starken Magnetfeldern umgebene Starkstromkabel im Boden oder an Seitenwänden von Verladehallen angeordnet sein können. Ebenso trifft dies auf Schrottverladestellen auf Schrottplätzen und in der Nähe von Bahnhöfen zu, bei denen Kräne mit von starken Magnetfeldern umgebenen Lasthebemagneten zum Einsatz kommen.

Es ist zwar allgemein bekannt, dass eine elektronische Einrichtung durch eine Anordnung in einem ferromagnetischen Hohlkörper vollständig gegen ein externes magnetisches Störfeld abgeschirmt werden kann. Eine derartige Abschirmung, die zum Beispiel aus ferromagnetischen Abschirmblechen besteht, ist jedoch relativ aufwendig, zumeist schwierig zu realisieren und erfordert nicht selten einen großen Bauraum.

Eine weitere Möglichkeit besteht darin, einen solchen Sensor zur Ermittlung eines externen magnetischen Störfeldes vorzusehen, welcher entfernt von den Magnetfeldern der als Signalgeber verwendeten Permanentmagneten angeordnet ist. Bei einem erkannten magnetischen Störfeld kann dies bei der Steuerung eines automatisierten Schaltgetriebes in geeigneter Weise berücksichtigt werden. Dies ist aber mit einem erhöhten apparativen und steuerungstechnischen Aufwand verbunden.

Eine entsprechende Sensoranordnung einer Stellvorrichtung, bei welcher die Position eines Permanentmagneten längs einer Bewegungsbahn von einem ersten Magnetfeldsensor (Hallsensor) und magnetische Störeinflüsse auf den ersten Magnetfeldsensor von einem zweiten Magnetfeldsensor erfasst werden, ist beispielsweise aus der DE 10 2014 010 601 A1 bekannt. Der zweite Magnetfeldsensor ist als Planarspule oder als Ringkernspule ausgebildet sowie außerhalb des Magnetfeldes des Permanentmagneten in einer Erfassungsebene angeordnet, deren Flächennormale senkrecht zu der von dem ersten Magnetfeldsensor erfassten Magnetfeldkomponente des Permanentmagneten ausgerichtet ist.

Angesichts des großen Aufwands für eine Abschirmung oder eines speziellen Sensors zum Erkennen des Vorhandenseins eines externen magnetischen Störfeldes liegt der Erfindung die Aufgabe zugrunde, ein Verfahren zur Ermittlung eines externen magnetischen Störfeldes in einem automatisierten Schaltgetriebe mittels einer Sensoranordnung zu schaffen, mit der ein solches externes magnetisches Störfeld ohne einen zusätzlichen apparativen Aufwand ermittelt werden kann.

Die Aufgabe wird durch ein Verfahren mit den Merkmalen des Anspruchs 1 gelöst.

Vorteilhafte Weiterbildungen des Verfahrens sind in den abhängigen Ansprüchen definiert.

In Zusammenhang mit dem erfindunsgemäßen Verfahren weist hierbei die Sensoranordnung mehrere Wegsensoren auf, welche jeweils aus einem an einer der Schaltstangen befestigten Signalgeber und einem gehäusefest angeordneten Signalaufnehmer bestehen, wobei die Signalgeber jeweils als Permanentmagnet ausgebildet sind, wobei die Signalaufnehmerjeweils als 3D-Hallsensor ausgebildet sind, und bei der die Signalaufnehmer über elektrische Sensorleitungen mit einer elektronischen Getriebesteuereinheit verbunden sind.

Zudem ist bei dieser Sensoranordnung vorgesehen, dass die Signalgeber mit gleicher axialer Ausrichtung ihrer Magnetpole N, S angeordnet sind, und dass die Signalaufnehmer in einer gemeinsamen, in ihrer Einbaulage horizontalen Ebene angeordnet sind.

Ein externes magnetisches Störfeld kann sich seitlich, über oder unter dem Fahrzeug befinden, welches zum Beispiel durch Starkstromkabel erzeugt wird, die an einer Wand oder im Boden einer Lagerhalle verlegt sind. Möglich ist es aber auch, dass ein externes magnetisches Störfeld von einem Lasthebemagneten erzeugt wird, welcher an einem Kranausleger befestigt ist und sich über dem Fahrzeug befindet. Aufgrund des geringen Abstands der Wegsensoren zueinander und mit der Annahme, dass die Stärke beziehungsweise magnetische Flussdichte des Störfeldes in einer bestimmten Höhe vom Boden konstant ist, wird mit der gleichen axialen Ausrichtung der Magnetpole (N, S) der Permanentmagneten sowie durch der Anordnung der Permanentmagneten und der 3D-Hallsensoren in einer gemeinsamen, in Einbaulage horizontalen Ebene erreicht, dass die von den Hallsensoren erfassten Störsignale weitgehend gleiche Intensitäten und zeitliche Verläufe aufweisen. Somit kann durch die Auswertung der Sensorsignale aller Hallsensoren das Vorhandensein eines starken magnetischen Störfeldes erkannt werden, durch welches die Positionsinformationen der Hallsensoren verfälscht werden.

Zur Lösung der verfahrensbezogenen Aufgabe ist gemäß der Erfindung vorgesehen, dass die Sensorsignale der Signalaufnehmer in einem festgelegten Zeittakt Δts erfasst sowie deren aktuellen Signalwerte xs abgespeichert werden, und dass das Vorhandensein eines externen magnetischen Störfeldes dadurch erkannt wird, dass die Signalwerte xs von wenigstens zwei Signalaufnehmern gleichzeitig eine Signalwertveränderung aufweisen, obwohl zuvor kein Schaltvorgang des Schaltgetriebes ausgelöst wurde. Der Zeittakt Δts kann beispielsweise einige Millisekunden bis wenige hundert Millisekunden betragen.

Ein externes magnetisches Störfeld kann in fünf Betriebssituationen eines Fahrzeugs auftreten:
- Das Fahrzeug steht mit eingeschaltetem Bordnetz im Bereich eines inaktiven magnetischen Störfeldes, und das magnetische Störfeld wird eingeschaltet.
- Das Fahrzeug steht mit abgeschaltetem Bordnetz im Bereich eines aktiven magnetischen Störfeldes, und das Bordnetz des Fahrzeugs wird eingeschaltet.
- Das Fahrzeug fährt in ein aktives magnetisches Störfeld hinein.
- Das Fahrzeug durchfährt ein aktives magnetisches Störfeld.
- Das Fahrzeug steht mit eingeschaltetem Bordnetz im Bereich eines inaktiven magnetischen Störfeldes, und das magnetische Störfeld wird eingeschaltet sowie wieder abgeschaltet.

Da die Stellgeschwindigkeit der Schaltstangen des Schaltgetriebes deutlich höher ist als mit maximal 30 km/h die Fahrgeschwindigkeit eines Fahrzeugs in der Nähe von Verladestellen, welche solche Störfelder aufweisen könnten, kann eine Signalwertveränderung der Sensorsignale eindeutig von einer Veränderung eines Sensorsignals aufgrund eines Schalt- oder Wählvorgangs unterschieden werden. Ebenso kann das Durchfahren oder das Einschalten und Abschalten eines magnetischen Störfeldes anhand der zeitlichen Verläufe der Sensorsignale erkannt werden.

Für die Beurteilung der Signalwertveränderung der Sensorsignale ist in Weiterbildung des genannten Verfahrens vorgesehen, dass für jeden Signalaufnehmer ein Mittelwert x_{S_M} der zuletzt erfassten Signalwerte xs gebildet wird, dass ein innerer Toleranzbereich der Signalwerte Δx_{S_T} um den jeweiligen Mittelwert x_{S_M} definiert wird, dass ein äußerer Störbereich der Signalwerte Δx_{S_S} um den jeweiligen Mittelwert x_{S_M} festgelegt wird, und dass ein das jeweils zuletzt erfasste Sensorsignal beinhaltender Beobachtungszeitraum Δt_{B} festgelegt wird. Die Breite des Toleranzbereiches Δx_{S_T} entspricht bei diesem Ausführungsbeispiel in beide Richtungen jeweils der von den Signalaufnehmern tolerierbaren Stärke beziehungsweise magnetische Flussdichte eines magnetischen Störfeldes von hier +/- 4 mT. Die Breite des Störbereiches Δx_{S_S} entspricht bei diesem Ausführungsbeispiel in beide Richtungen vom Mittelwert x_{S_M} jeweils der maximal angenommenen Stärke beziehungsweise magnetische Flussdichte eines externen magnetischen Störfeldes von hier +/-25 mT, und der Beobachtungszeitraum Δt_{B} hat dabei vorzugsweise die Länge eines einstelligen Sekundenbereiches (Δt_{B} = 1 Sekunde bis 9 Sekunden).

Das Vorliegen eines für ein sachgerechtes Funktionieren der Schaltvorrichtung kritischen magnetischen Störfeldes wird als erkannt beurteilt, wenn kein Schaltvorgang des Schaltgetriebes ausgelöst wurde, die Sensorsignale x_{S1}(t), x_{S2}(t), x_{S3}(t), x_{S4}(t) aller Signalaufnehmer zu Beginn t1 und zum Ende t2 des Beobachtungszeitraums Δt_{B} den Toleranzbereich Δx_{S_T} überschritten oder unterschritten haben, und dabei innerhalb des erwähnten Störbereiches Δx_{S_S} geblieben sind.

Dagegen wird das Vorliegen eines für ein sachgerechtes Funktionieren der Schaltvorrichtung kritischen magnetischen Störfeldes als nicht erkannt angesehen, wenn kein Schaltvorgang des Schaltgetriebes ausgelöst wurde, die Sensorsignale x_{S1}(t), x_{S2}(t), x_{S3}(t), x_{S4}(t) aller Signalaufnehmer zu Beginn t1 des Beobachtungszeitraums Δt_{B} den Toleranzbereich Δx_{S_T} überschritten oder unterschritten haben, und danach innerhalb des Störbereiches Δx_{S_S} geblieben sind, jedoch das Sensorsignal x_{S2}(t) mindestens eines Signalaufnehmers innerhalb des Beobachtungszeitraums Δt_{B} in den Toleranzbereich Ax_{S_T} zurückgekehrt ist. Der letztgenannte Signalverlauf entspricht zum Beispiel dem Überfahren eines im oder auf dem Boden verlegten Starkstromkabels durch das Fahrzeug, welches aber aufgrund der kurzen Einwirkzeit des Störmagnetfeldes als unkritisch angesehen werden kann.

Ebenso wird das Vorliegen eines für ein sachgerechtes Funktionieren der Schaltvorrichtung kritischen magnetischen Störfeldes als nicht erkannt beurteilt, wenn die Sensorsignale x_{S1}(t), x_{S2}(t), x_{S3}(t), x_{S4}(t) aller Signalaufnehmer zu Beginn t1 des Beobachtungszeitraums Δt_{B} den Toleranzbereich Δx_{S_T} überschritten oder unterschritten haben, jedoch das Sensorsignal x_{S2}(t) mindestens eines Signalaufnehmers innerhalb des Beobachtungszeitraums Δt_{B} aufgrund einer inzwischen eingetretenen Schaltanforderung des Getriebes den Störbereich Δx_{S_S} verlassen hat. Dieser Signalverlauf entspricht einem Schaltvorgang, bei dem die zugeordnete Schaltstange axial verschoben wird, welches aufgrund der Ansteuerung des zugeordneten Schaltaktuators durch die elektronische Getriebesteuereinheit auch erfasst wird.

Beim Erkennen eines magnetischen Störfeldes mit Feldstärke, welche geeignet ist, dass durch dieses die Sensorsignale der Signalaufnehmer verfälscht werden könnten, kann auf verschiedene Art reagiert werden. So kann die Aktualisierung der Signalwerte unterdrückt oder eine Schaltung des Schaltgetriebes verhindert werden. Möglich ist es auch, dass in diesem Fall nur noch die Schaltung des Schaltgetriebes in einen bestimmten Vorwärtsgang und/oder einen bestimmten Rückwärtsgang zugelassen wird, um das Verlassen des magnetischen Störfeldes zu ermöglichen, wobei bei dieser Schaltung nicht auf die Sensorsignale der Signalaufnehmer zurückgegriffen wird, sondern die Schaltsteuerung stattdessen mit für eine solche Schaltung großzügig bemessenen Schaltzeiträumen erfolgt.

Zur weiteren Verdeutlichung der Erfindung ist der Beschreibung eine Zeichnung mit einem Ausführungsbeispiel beigefügt. In dieser zeigt
Fig. 1 eine Schaltvorrichtung eines automatisierten Schaltgetriebes mit vier Schaltstangen und eine Sensoranordnung mit vier Wegsensoren in einer schematischen Draufsicht, wobei die Schaltvorrichtung wie auch die besagte Sensoranordnung Bestandteil des erfindungsgemäßen Verfahrens sind,
Fig. 2a bis 2d erste Verläufe der Sensorsignale der vier Wegsensoren gemäß Fig. 1 zur Ermittlung eines externen magnetischen Störfeldes,
Fig. 3a bis 3d zweite Verläufe der Sensorsignale der vier Wegsensoren gemäß Fig. 1 zur Ermittlung eines externen magnetischen Störfeldes, und
Fig. 4a bis 4d dritte Verläufe der Sensorsignale der vier Wegsensoren gemäß Fig. 1 zur Ermittlung eines externen magnetischen Störfeldes.

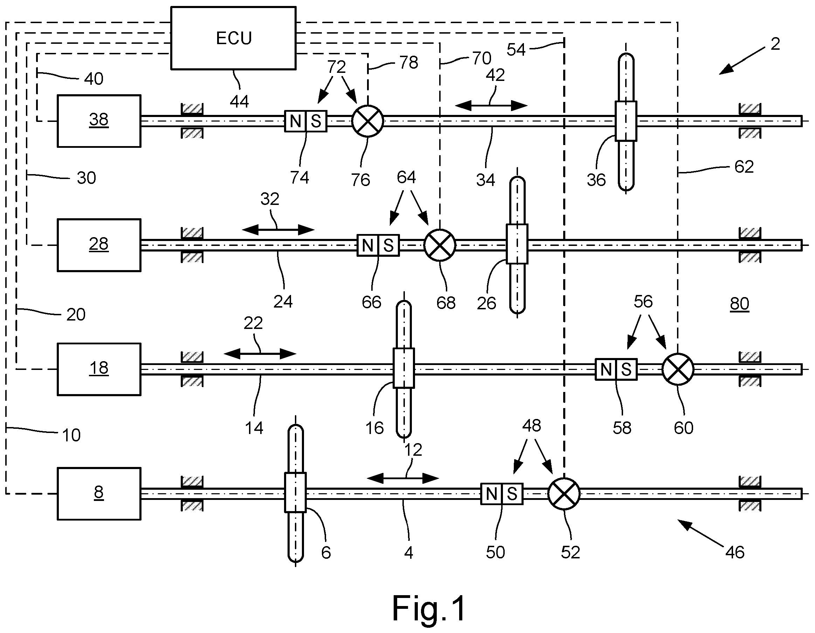

In Fig. 1 ist die Schaltvorrichtung 2 eines automatisierten, in Vorgelegebauweise ausgeführten Schaltgetriebes in einer schematischen Draufsicht abgebildet. Das Schaltgetriebe ist als ein Gruppengetriebe ausgebildet und umfasst ein vierstufiges Hauptgetriebe, eine dem Hauptgetriebe vorgeordnete zweistufige Splitgruppe und eine dem Hauptgetriebe nachgeordnete zweistufige Bereichsgruppe.

Der Splitgruppe ist eine erste Schaltstange 4 zugeordnet, welche achsparallel zu den nicht abgebildeten Getriebewellen angeordnet und gemäß dem ersten Doppelrichtungspfeil 12 axialbeweglich in einem nicht näher dargestellten Getriebegehäuse gelagert ist. Auf der ersten Schaltstange 4 ist eine erste Schaltgabel 6 starr befestigt, welche in nicht dargestellter Weise in eine drehfest und axial verschiebbar auf einer Getriebewelle geführte Schaltmuffe eingreift. Durch eine Axialverschiebung der ersten Schaltstange 4 und damit der zugeordneten Schaltmuffe kann zwischen zwei Übersetzungsstufen der Splitgruppe umgeschaltet werden. Hierzu steht die erste Schaltstange 4 mit einem ersten Schaltaktuator 8 in Stellverbindung, welcher über eine erste elektrische Steuerleitung 10 mit einer elektronischen Getriebesteuereinheit 44 verbunden ist. Bei dem Schaltaktuator 8 kann es sich um eine hydraulische oder pneumatische Kolben-Zylinder-Anordnung handeln, deren Druckräume über Magnetventile mit einem Druckmittel beaufschlagbar oder entlastbar sind. Möglich ist aber auch eine elektromotorische oder elektromagnetische Ausbildung des ersten Schaltaktuators 8 und auch aller weiteren Schaltaktuatoren 18, 28, 38.

Dem Hauptgetriebe ist eine zweite sowie eine dritte Schaltstange 14, 24 zugeordnet, welche achsparallel zueinander und zu den Getriebewellen und der ersten Schaltstange 4 der Splitgruppe angeordnet. Diese beiden Schaltstangen 14, 24 sind gemäß dem zweiten und dritten Doppelrichtungspfeil 22, 32 axialbeweglich in dem Getriebegehäuse gelagert. Auf jeder dieser beiden Schaltstangen 14, 24 ist jeweils eine Schaltgabel 16, 26 starr befestigt, welche in nicht dargestellter Weise jeweils in eine drehfest und axial verschiebbar auf einer Getriebewelle geführte Schaltmuffe eingreifen. Durch eine Axialverschiebung jeweils einer dieser beiden Schaltstangen 14, 24 und damit der mit der zugeordneten Schaltgabel 16, 26 in Eingriff stehenden Schaltmuffe kann jeweils zwischen den Schaltpositionen von zwei Übersetzungsstufen des Hauptgetriebes und einer Neutralposition, in der beide Übersetzungsstufen ausgelegt sind, umgeschaltet werden. Hierzu stehen die zweite und dritte Schaltstange 14, 24 mit einem zugeordneten zweiten beziehungsweise dritten Schaltaktuator 18, 28 in Stellverbindung, welche über jeweils eine elektrische Steuerleitung 20, 30 mit der elektronischen Getriebesteuereinheit 44 verbunden sind.

Der Bereichsgruppe des Gruppengetriebes ist eine vierte Schaltstange 34 zugeordnet, welche achsparallel zu den Getriebewellen und den drei anderen Schaltstangen 4, 14, 24 angeordnet sowie entsprechend dem vierten Doppelrichtungspfeil 42 axialbeweglich in dem Getriebegehäuse gelagert ist. An der vierten Schaltstange 34 ist eine vierte Schaltgabel 36 starr befestigt, welche in nicht dargestellter Weise in eine drehfest und axial verschiebbar auf einer Getriebewelle geführte Schaltmuffe eingreift. Durch eine Axialverschiebung der vierten Schaltstange 34 und damit der Schaltmuffe kann zwischen zwei Übersetzungsstufen der Bereichsgruppe umgeschaltet werden. Hierzu steht die vierte Schaltstange 34 mit einem vierten Schaltaktuator 38 in Stellverbindung, welcher über eine elektrische Steuerleitung 40 mit der elektronischen Getriebesteuereinheit 44 verbunden ist.

Eine zugeordnete Sensoranordnung 46 umfasst vier Wegsensoren 48, 56, 64, 72. Diese Wegsensoren 48, 56, 64, 72 bestehen jeweils aus einem an einer der vier Schaltstangen 4, 14, 24, 34 befestigten, als Permanentmagnet ausgebildeten Signalgeber 50, 58, 66, 74 und einem gehäusefest angeordneten, als 3D-Hallsensor ausgebildeten Signalaufnehmer 52, 60, 68, 76. Die Signalaufnehmer 52, 60, 68, 76 sind über jeweils zugeordnete elektrische Sensorleitungen 54, 62, 70, 78 mit der elektronischen Getriebesteuereinheit 44 verbunden.

In Zusammenhang mit dem erfindungsgemäßen Verfahren sind die als Permanentmagneten ausgebildeten Signalgeber 50, 58, 66, 74 mit gleicher axialer Ausrichtung ihrer Magnetpole N, S sowie die als 3D-Hallsensoren ausgebildeten Signalaufnehmer 52, 60, 68, 76 in einer gemeinsamen, in ihrer Einbaulage horizontalen Ebene 80 angeordnet. In der Fig.1 entspricht diese horizontale Ebene 80 der Zeichnungsebene. Durch diese spezielle Anordnung der Wegsensoren 48, 56, 64, 72 wirkt sich ein externes magnetisches Störfeld an allen vier Signalaufnehmern 52, 60, 68, 76 beziehungsweise 3D-Hallsensoren weitgehend gleich aus, sodass das Vorhandensein eines starken magnetischen Störfeldes, durch welches die Stellpositionssignale der Signalaufnehmer 52, 60, 68, 76 verfälscht werden, durch die Auswertung der Sensorsignale x_{S1}, x_{S2}, x_{S3}, x_{S4} aller Signalaufnehmern 52, 60, 68, 76 erkannt werden kann.

Die Sensorsignale x_{S1}, x_{S2}, x_{S3}, x_{S4} der als Hallsensoren ausgebildeten Signalaufnehmer 52, 60, 68, 76 werden in Form der jeweils sensierten Stellposition in einem festgelegten Zeittakt Δt_{S} erfasst und als aktueller Signalwert x_{S_akt} eines jeden Hallsensors 52, 60, 68, 76 abgespeichert. Das Vorhandensein eines externen magnetischen Störfeldes wird dadurch erkannt, dass die zuletzt erfassten Sensorsignale xs aller Signalaufnehmer 52, 60, 68, 76 ohne das Vorliegen einer aktiven Schaltanforderung beziehungsweise einer gerade ablaufenden Getriebeschaltung gleichzeitig eine Signalwertveränderung aufweisen. Da die Stellgeschwindigkeit der Schaltstangen 4, 14, 24, 34 deutlich höher ist als die Fahrgeschwindigkeit von maximal 30 km/h eines Fahrzeugs in der Nähe von Verladestellen, kann eine Signalwertveränderung der Sensorsignale x_{S1}, x_{S2}, x_{S3}, x_{S4} deutlich von einer Veränderung eines Sensorsignals aufgrund eines Schalt- oder Wählvorgangs unterschieden werden. Ebenso kann das Durchfahren oder das Einschalten und Abschalten eines magnetischen Störfeldes anhand des zeitlichen Verlaufs der Sensorsignale x_{S}(t) erkannt werden.

Hierzu ist vorgesehen, dass für die Beurteilung der Signalwertveränderung der Sensorsignale x_{S}(t) eines jeden Signalaufnehmers 52, 60, 68, 76 ein Mittelwert x_{S_M} der zuletzt erfassten Sensorsignale x_{S} gebildet wird. Um den jeweiligen Mittelwert x_{S_M} wird ein innerer Toleranzbereich Δx_{S_T} sowie ein äußerer Störbereich Δx_{S_S} für die Sensorsignale x_{S}(t) definiert. Hierbei sind die Werte des inneren Toleranzbereiches Δx_{S_T} kleiner als die Werte des äußeren Störbereiches Δx_{S_S}. Zudem wird ein das jeweils zuletzt erfasste Sensorsignal xs beinhaltender Beobachtungszeitraum Δt_{B} festgelegt.

Die Breite des Toleranzbereiches Δx_{S_T} entspricht in beide Richtungen jeweils der von den Signalaufnehmern 52, 60, 68, 76 tolerierbaren Stärke beziehungsweise magnetischen Flussdichte eines magnetischen Störfeldes von hier beispielsweise +/- 4 mT. Die Breite des Störbereiches Δx_{S_S} entspricht in beide Richtungen jeweils der maximal angenommenen Stärke beziehungsweise magnetischen Flussdichte eines externen magnetischen Störfeldes von hier beispielsweise +/- 25 mT. Der Beobachtungszeitraum Δt_{B} ist als ein einstelliger Sekundenbereich definiert und kann in diesem Ausführungsbeispiel zwischen 1 und 9 Sekunden betragen.

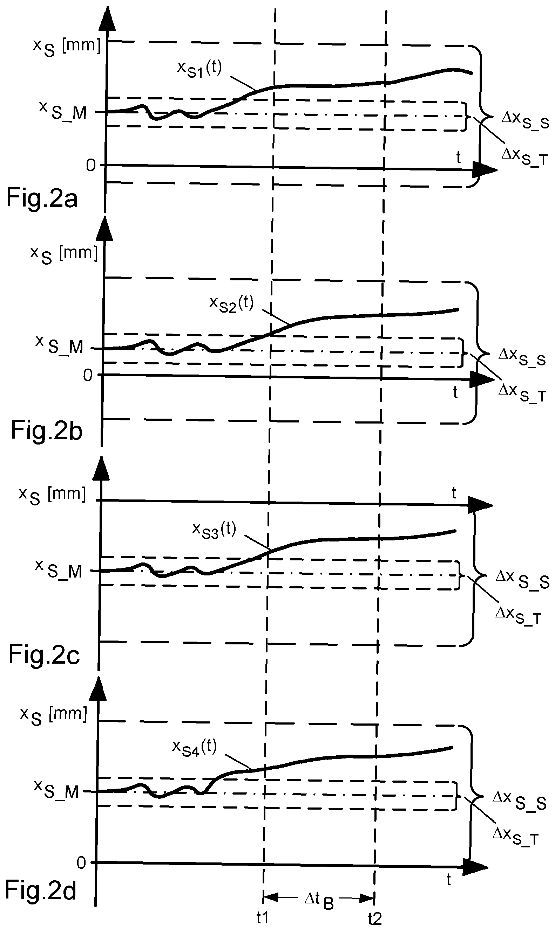

Die Beurteilung der zeitlichen Verläufe der Sensorsignale x_{S1}(t), x_{S2}(t), x_{S3}(t), x_{S4}(t) der vier als 3D-Hallsensoren ausgebildeten Signalaufnehmer 52, 60, 68, 76 im Hinblick auf das Vorliegen eines magnetischen Störfeldes wird nachfolgend anhand von drei in den Figuren 2a, 2b, 2c, 2d; 3a, 3b, 3c, 3d; 4a, 4b, 4c, 4d abgebildeten Beispielen beschrieben.

In dem in den Figuren 2a, 2b, 2c, 2d abgebildeten ersten Beispiel ist zu erkennen, dass die Signalwerte xs der Sensorsignale x_{S1}(t), x_{S2}(t), x_{S3}(t), x_{S4}(t) aller vier als 3D-Hallsensoren ausgebildeten Signalaufnehmer 52, 60, 68, 76 zu Beginn des Beobachtungszeitraums Δt_{B} (Zeitpunkt t1) und zum Ende des Beobachtungszeitraums Δt_{B} (Zeitpunkt t2) den inneren Toleranzbereich Δx_{S_T} überschritten haben und dabei innerhalb des äußeren Störbereiches Δx_{S_S} geblieben sind. Aufgrund der bei allen zeitlichen Verläufen der Sensorsignale x_{S1}(t), x_{S2}(t), x_{S3}(t), x_{S4}(t) erkannten weitgehend identischen Signalwertveränderung sowie das Nichtvorliegen einer aktiven Schaltanforderung wird in diesem Fall das Vorhandensein eines kritischen, äußeren magnetischen Störfeldes erkannt.

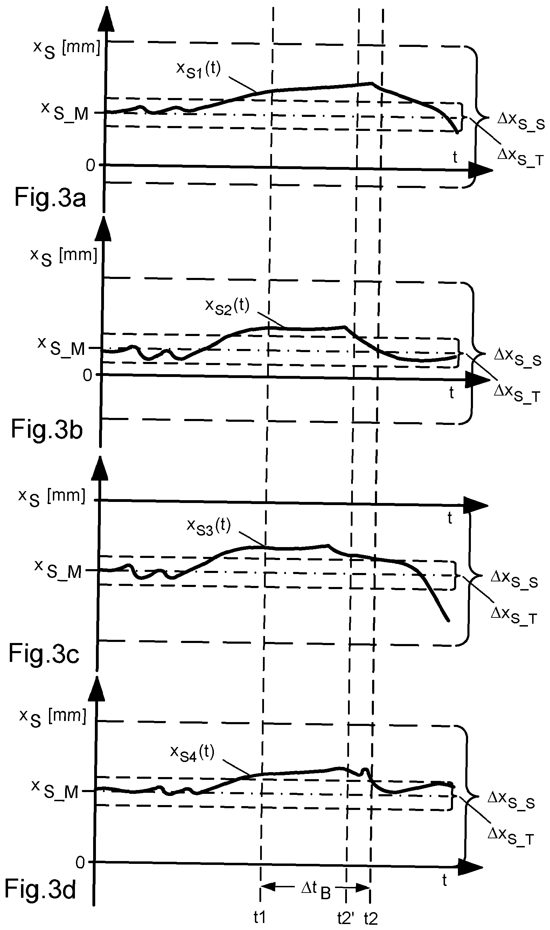

In dem in den Figuren 3a, 3b, 3c, 3d abgebildeten zweiten Beispiel ist zu erkennen, dass die Signalwerte xs der Sensorsignale x_{S1}(t), x_{S3}(t), x_{S4}(t) des ersten, dritten und vierten Signalaufnehmers 52, 68, 76 gemäß den Figuren 3a, 3c, 3d zu Beginn des Beobachtungszeitraums Δt_{B} (Zeitpunkt t1) sowie zum Ende des Beobachtungszeitraums Δt_{B} (Zeitpunkt t2) den inneren Toleranzbereich Δx_{S_T} überschritten haben und dabei innerhalb des äußeren Störbereiches Δx_{S_S} geblieben sind. Dagegen haben die Signalwerte x_{S} des Sensorsignals x_{S2}(t) des zweiten Signalaufnehmers 60 gemäß Fig. 3b zwar den inneren Toleranzbereich Δx_{S_T} zu Beginn des Beobachtungszeitraums Δt_{B} (Zeitpunkt t1) überschritten, es ist jedoch vor dem Ende des Beobachtungszeitraums Δt_{B} zum Zeitpunkt t2' in den Toleranzbereich Δx_{S_T} zurückgekehrt. Da keine aktive Schaltanforderung vorliegt, und der zeitliche Verlauf des Sensorsignals x_{S2}(t) des zweiten Signalaufnehmers 60 auf eine nur kurzfristige Beeinflussung der Sensorsignale x_{S1}(t), x_{S2}(t), x_{S3}(t), x_{S4}(t) aller Signalaufnehmer 52, 60, 68, 76 schließen lässt, wird in diesem Fall das Vorliegen eines kritischen, äußeren magnetischen Störfeldes als nicht erkannt beurteilt.

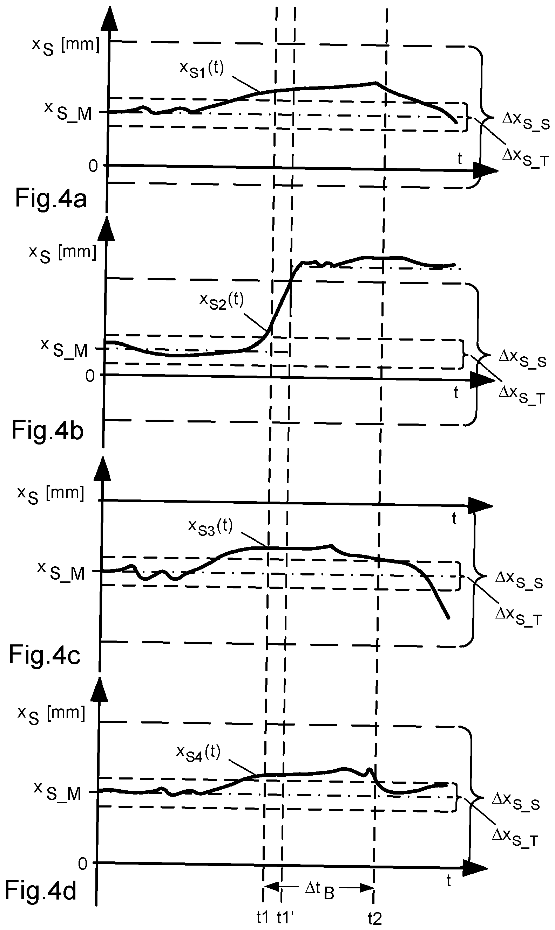

In dem in den Figuren 4a, 4b, 4c, 4d abgebildeten dritten Beispiel ist zu erkennen, dass die Signalwerte x_{S} der Sensorsignale x_{S1}(t), x_{S3}(t), x_{S4}(t) des ersten, dritten und vierten Signalaufnehmers 52, 68, 76 gemäß den Figuren 4a, 4c, 4d zu Beginn des Beobachtungszeitraums Δt_{B} (Zeitpunkt t1) und zum Ende des Beobachtungszeitraums Δt_{B} (Zeitpunkt t2) den inneren Toleranzbereich Δx_{S_T} überschritten haben und dabei innerhalb des äußeren Störbereiches Δx_{S_S} geblieben sind. Dagegen haben gemäß Fig. 4b die Signalwerte x_{S} des Sensorsignals x_{S2}(t) des zweiten Signalaufnehmers 60 zwar den inneren Toleranzbereich Δx_{S_T} zu Beginn des Beobachtungszeitraums Δt_{B} (Zeitpunkt t1) überschritten, es hat jedoch kurz danach zum Zeitpunkt t1' aufgrund einer inzwischen eingetretenen Schaltanforderung beziehungsweise Getriebeschaltung den äußeren Störbereich Δx_{S_S} überschritten. Daher wird auch in diesem Fall das Vorliegen eines kritischen magnetischen Störfeldes als nicht erkannt angesehen.

### Bezugszeichenliste (Teil der Beschreibung)

- 2: Schaltvorrichtung
- 4: Erste Schaltstange
- 6: Erste Schaltgabel
- 8: Erster Schaltaktuator
- 10: Steuerleitung
- 12: Erster Doppelrichtungspfeil
- 14: Zweite Schaltstange
- 16: Zweite Schaltgabel
- 18: Zweiter Schaltaktuator
- 20: Steuerleitung
- 22: Zweiter Doppelrichtungspfeil
- 24: Dritte Schaltstange
- 26: Dritte Schaltgabel
- 28: Dritter Schaltaktuator
- 30: Steuerleitung
- 32: Dritter Doppelrichtungspfeil
- 34: Vierte Schaltstange
- 36: Vierte Schaltgabel
- 38: Vierter Schaltaktuator
- 40: Steuerleitung
- 42: Vierter Doppelrichtungspfeil
- 44: Elektronische Getriebesteuereinheit, ECU
- 46: Sensoranordnung
- 48: Erster Wegsensor
- 50: Erster Signalgeber, Permanentmagnet
- 52: Erster Signalaufnehmer, 3D-Hallsensor
- 54: Sensorleitung
- 56: Zweiter Wegsensor
- 58: Zweiter Signalgeber, Permanentmagnet
- 60: Zweiter Signalaufnehmer, 3D-Hallsensor
- 62: Sensorleitung
- 64: Dritter Wegsensor
- 66: Dritter Signalgeber, Permanentmagnet
- 68: Dritter Signalaufnehmer, 3D-Hallsensor
- 70: Sensorleitung
- 72: Vierter Wegsensor
- 74: Vierter Signalgeber, Permanentmagnet
- 76: Vierter Signalaufnehmer, 3D-Hallsensor
- 78: Sensorleitung
- 80: Horizontale Ebene
- N: Magnetischer Nordpol
- S: Magnetischer Südpol
- t: Zeit
- t1, t2: Zeitpunkte
- t1', t2': Zeitpunkte
- Δt_{B}: Beobachtungszeitraum
- Δts: Zeittakt
- x_{S}: Signalwerte eines Sensorsignals; Signalwerte
- x_{S}(t): Zeitlicher Verlauf eines Sensorsignals
- x_{S1}(t): Zeitlicher Verlauf des Sensorsignals des ersten Signalaufnehmers
- x_{S2}(t): Zeitlicher Verlauf des Sensorsignals des zweiten Signalaufnehmers
- x_{S3}(t): Zeitlicher Verlauf des Sensorsignals des dritten Signalaufnehmers
- x_{S4}(t): Zeitlicher Verlauf des Sensorsignals des vierten Signalaufnehmers
- x_{S_akt}: Aktueller Signalwert
- x_{S_M}: Mittelwert der Signalwerte
- Δx_{S_T}: Toleranzbereich der Signalwerte
- Δx_{S_S}: Störbereich der Signalwerte

## Patentansprüche

1. Verfahren zur Ermittlung eines externen magnetischen Störfeldes in einem automatisierten Schaltgetriebe mittels einer Sensoranordnung (46), wobei das automatisierte Schaltgetriebe eine Schaltvorrichtung (2) mit mehreren achsparallel zueinander angeordneten und mittels zugeordneter Schaltaktuatoren (8, 18, 28, 38) axial verschiebbaren Schaltstangen (4, 14, 24, 34) aufweist, wobei die Sensoranordnung (46) mehrere
Wegsensoren (48, 56, 64, 72) aufweist, welche jeweils aus einem an einer der Schaltstangen (4, 14, 24, 34) befestigten Signalgeber (50, 58, 66, 74) und einem gehäusefest angeordneten Signalaufnehmer (52, 60, 68, 76) bestehen, wobei die Signalgeber (50, 58, 66, 74) jeweils als Permanentmagnet ausgebildet sind, wobei die Signalaufnehmer (52, 60, 68, 76) jeweils als 3D-Hallsensor ausgebildet sind, und bei der die Signalaufnehmer (52, 60, 68, 76) über elektrische Sensorleitungen (54, 62, 70, 78) mit einer elektronischen Getriebesteuereinheit (44) verbunden sind,
wobei die Signalgeber (50, 58, 66, 74) mit gleicher axialer Ausrichtung ihrer Magnetpole (N, S) angeordnet sind, und wobei die Signalaufnehmer (52, 60, 68, 76) in einer gemeinsamen, in ihrer Einbaulage horizontalen Ebene (80) angeordnet sind,
**dadurch gekennzeichnet, dass** die Sensorsignale der Signalaufnehmer (52, 60, 68, 76) in einem festgelegten Zeittakt (Δts) erfasst und deren aktuellen Signalwerte (xs) abgespeichert werden, und dass das Vorhandensein eines externen magnetischen Störfeldes dadurch erkannt wird, dass die Signalwerte (xs) von wenigstens zwei Signalaufnehmern (52, 60, 68, 76) gleichzeitig eine Signalwertveränderung aufweisen, ohne das ein Schaltvorgang des Schaltgetriebes ausgelöst wurde.

2. Verfahren nach Anspruch 1, **dadurch gekennzeichnet, dass** für die Beurteilung der Signalwertveränderung eines jeden Signalaufnehmers (52, 60, 68, 76) ein Mittelwert (x_{S_M}) der zuletzt erfassten Signalwerte (xs) gebildet wird, dass ein innerer Toleranzbereich der Signalwerte (Δx_{S_T}) um den jeweiligen Mittelwert (x_{S_M}) definiert wird, dass ein äußerer Störbereich der Signalwerte (Δx_{S_S}) um den jeweiligen Mittelwert (x_{S_M}) festgelegt wird, dass ein das jeweils zuletzt erfasste Sensorsignal beinhaltender Beobachtungszeitraum (Δt_{B}) festgelegt wird, dass die Breite des Toleranzbereiches (Δx_{S_T}) in beide Richtungen jeweils der von den Signalaufnehmern (52, 60, 68, 76) tolerierbaren Stärke eines magnetischen Störfeldes von +/- 4 mT entspricht, dass die Breite des Störbereiches (Δx_{S_S}) in beide Richtungen vom Mittelwert (x_{S_M}) jeweils der maximal angenommenen Stärke eines externen magnetischen Störfeldes von +/-25 mT entspricht, und dass der Beobachtungszeitraum (Δt_{B}) als ein einstelliger Sekundenbereich definiert ist.

3. Verfahren nach Anspruch 1 oder 2, **dadurch gekennzeichnet, dass** ein für ein sachgerechtes Funktionieren der Schaltvorrichtung (2) kritisches magnetisches Störfeld als erkannt gilt, wenn kein Schaltvorgang des Schaltgetriebes ausgelöst wurde, die Sensorsignale (x_{S1}(t), x_{S2}(t), x_{S3}(t), x_{S4}(t)) aller Signalaufnehmer (52, 60, 68, 76) zu Beginn (t1) und zum Ende (t2) des Beobachtungszeitraums (Δte) den Toleranzbereich (Δx_{S_T}) überschritten oder unterschritten haben, und dabei innerhalb des Störbereiches (Δx_{S_S}) geblieben sind.

4. Verfahren nach Anspruch 1 oder 2, **dadurch gekennzeichnet, dass** ein für ein sachgerechtes Funktionieren der Schaltvorrichtung (2) kritisches magnetisches Störfeld als nicht erkannt gilt, wenn kein Schaltvorgang des Schaltgetriebes ausgelöst wurde, die Sensorsignale (x_{S1}(t), x_{S2}(t), x_{S3}(t), x_{S4}(t)) aller Signalaufnehmer (52, 60, 68, 76) zu Beginn (t1) des Beobachtungszeitraums (Δte) den Toleranzbereich (Δx_{S_T}) überschritten oder unterschritten haben, und danach innerhalb des Störbereiches (Δx_{S_S}) geblieben sind, jedoch das Sensorsignal (x_{S2}(t)) mindestens eines Signalaufnehmers (60) innerhalb des Beobachtungszeitraums (Δte) in den Toleranzbereich (Δx_{S_T}) zurückgekehrt ist.

5. Verfahren nach Anspruch 1 oder 2, **dadurch gekennzeichnet, dass** ein für ein sachgerechtes Funktionieren der Schaltvorrichtung (2) kritisches magnetisches Störfeld als nicht erkannt gilt, wenn die Sensorsignale (x_{S1}(t), x_{S2}(t), x_{S3}(t), x_{S4}(t)) aller Signalaufnehmer (52, 60, 68, 76) zu Beginn (t1) des Beobachtungszeitraums (Δte) den Toleranzbereich (Δx_{S_T}) überschritten oder unterschritten haben, jedoch das Sensorsignal (x_{S2}(t)) mindestens eines Signalaufnehmers (60) innerhalb des Beobachtungszeitraums (Δt_{B}) aufgrund einer inzwischen eingetretenen Schaltanforderung den Störbereich (Δx_{S_S}) verlassen hat.

6. Verfahren nach einem der Ansprüche 1 bis 5, **dadurch gekennzeichnet, dass** beim Erkennen eines magnetischen Störfeldes mit einer hohen Feldstärke, durch welches die Sensorsignale der Signalaufnehmer (52, 60, 68, 76) verfälscht werden könnten, die Aktualisierung der Signalwerte unterdrückt wird.

7. Verfahren nach einem der Ansprüche 1 bis 5, **dadurch gekennzeichnet, dass** beim Erkennen eines magnetischen Störfeldes mit einer hohen Feldstärke, durch welches die Sensorsignale der Signalaufnehmer (52, 60, 68, 76) verfälscht werden könnten, eine Schaltung des Schaltgetriebes verhindert wird.

8. Verfahren nach einem der Ansprüche 1 bis 5, **dadurch gekennzeichnet, dass** beim Erkennen eines magnetischen Störfeldes mit einer hohen Feldstärke, durch welches die Sensorsignale der Signalaufnehmer (52, 60, 68, 76) verfälscht werden könnten, nur noch die Schaltung des Schaltgetriebes (2) in einen bestimmten Vorwärtsgang und/oder einen bestimmten Rückwärtsgang zugelassen wird, um das Verlassen des magnetischen Störfeldes zu ermöglichen, wobei bei dieser Schaltung nicht auf die Sensorsignale der Signalaufnehmer (52, 60, 68, 76) zurückgegriffen wird, sondern die Schaltsteuerung stattdessen mit für eine solche Schaltung großzügig bemessenen Schaltzeiträumen erfolgt.

## Claims

1. Method for determining an external magnetic interference field in an automated transmission by means of a sensor arrangement (46), the automated transmission comprising a shifting device (2) having a plurality of shift rods (4, 14, 24, 34) which are arranged axially parallel to one another and are axially displaceable by means of associated shift actuators (8, 18, 28, 38), the sensor arrangement (46) comprising a plurality of displacement sensors (48, 56, 64, 72), each consisting of a signal transmitter (50, 58, 66, 74) fastened to one of the shift rods (4, 14, 24, 34) and a signal receiver (52, 60, 68, 76) fixedly arranged on the housing, the signal transmitters (50, 58, 66, 74) each being designed as a permanent magnet, the signal receivers (52, 60, 68, 76) each being designed as a 3D Hall sensor, and in which the signal receivers (52, 60, 68, 76) are connected to an electronic transmission control unit (44) via electrical sensor lines (54, 62, 70, 78), the signal transmitters (50, 58, 66, 74) having the same axial alignment of their magnetic poles (N, S), and the signal receivers (52, 60, 68, 76) being arranged in a common plane (80) which is horizontal in their installed position, **characterized in that** the signal receiver (52, 60, 68, 76) detects the sensor signals at a fixed time interval (Δts) and their current signal values (xs) are stored, **and in that** the presence of an external magnetic interference field is detected when the signal values (x_{S}) of at least two signal receivers (52, 60, 68, 76) simultaneously exhibit a signal value change without a shifting operation of the transmission being triggered.

2. Method according to claim 1, **characterized in that,** for the evaluation of the signal value change of each signal receiver (52, 60, 68, 76), an average value (x_{S_M}) of the last detected signal values (xs) is established, **in that** an internal tolerance range of the signal values (Δx_{S_T}) around the relevant mean value (x_{S_M}) is defined in each case, **in that** an external interference range of the signal values (Δx_{S_S}) around the relevant mean value (x_{S_M}) is specified, **in that** an observation period (Δt_{B}) containing the last detected sensor signal is specified in each case, **in that** the width of the tolerance range (Δx_{S_T}) corresponds in both directions to the strength of a magnetic interference field of +/- 4 mT that can be tolerated by the signal receivers (52, 60, 68, 76) in each case, **in that** the width of the interference range (Δxs_s) in both directions from the mean value (x_{S_M}) corresponds to the maximum assumed strength of an external magnetic interference field of +/- 25 mT in each case, **and in that** the observation period (Δt_{B}) is defined as a single-digit second range.

3. Method according to either claim 1 or claim 2, **characterized in that** a magnetic interference field critical for the proper functioning of the shifting device (2) is deemed to be detected if no shifting operation of the transmission has been triggered, and the sensor signals (x_{S1}(t), x_{S2}(t), x_{S3}(t), x_{S4}(t)) of all signal receivers (52, 60, 68, 76) have exceeded or fallen below the tolerance range (Δx_{S_T}) at the beginning (t1) and at the end (t2) of the observation period (Δt_{B}), and have remained within the interference range (Δxs_s).

4. Method according to either claim 1 or claim 2, **characterized in that** a magnetic interference field critical for the proper functioning of the shifting device (2) is not deemed to be detected if no shifting operation of the transmission has been triggered, and the sensor signals (x_{S1}(t), x_{S2}(t), x_{S3}(t), x_{S4}(t)) of all signal receivers (52, 60, 68, 76) have exceeded or fallen below the tolerance range (Δx_{S_T}) at the beginning (t1) of the observation period (Δt_{B}) and then remained within the interference range (Δxs_s), but the sensor signal (x_{S2}(t)) of at least one signal receiver (60) returned to the tolerance range (Δx_{S_T}) within the observation period (Δt_{B}).

5. Method according to either claim 1 or claim 2, **characterized in that** a magnetic interference field critical for the proper functioning of the shifting device (2) is not deemed to be detected if the sensor signals (x_{S1}(t), x_{S2}(t), x_{S3}(t), x_{S4}(t)) of all signal receivers (52, 60, 68, 76) have exceeded or fallen below the tolerance range (Δx_{S_T}) at the beginning (t1) of the observation period (Δt_{B}), but the sensor signal (x_{S2}(t)) of at least one signal receiver (60) has exited the interference range (Δxs_s) within the observation period (Δt_{B}) due to a shift request that has occurred in the meantime.

6. Method according to any of claims 1 to 5, **characterized in that** when a magnetic interference field having a high field strength which could corrupt the sensor signals of the signal receivers (52, 60, 68, 76) is detected, the updating of the signal values is suppressed.

7. Method according to any of claims 1 to 5, **characterized in that,** when a magnetic interference field having a high field strength which could corrupt the sensor signals of the signal receivers (52, 60, 68, 76) is detected, shifting of the transmission is prevented.

8. Method according to any of claims 1 to 5, **characterized in that,** when a magnetic interference field having a high field strength which could corrupt the sensor signals of the signal receivers (52, 60, 68, 76) is detected, only the shifting of the transmission (2) into a specific forward gear and/or a specific reverse gear is permitted in order to allow the magnetic interference field to be exited, the sensor signals of the signal receivers (52, 60, 68, 76) not being relied upon for this shifting, but the shifting control instead being carried out using shifting time periods which are generously proportioned for such shifting.

## Revendications

1. Procédé permettant de déterminer un champ parasite magnétique externe dans une boîte de vitesses automatisée au moyen d'un système à capteurs (46), dans lequel la boîte de vitesses automatisée présente un dispositif de changement de vitesse (2) comportant plusieurs tringles de changement de vitesses (4, 14, 24, 34) disposées de manière parallèle à l'axe les unes par rapport aux autres et pouvant être déplacées axialement au moyen d'actionneurs de changement de vitesses (8, 18, 28, 38) associés, dans lequel le système à capteurs (46) présente plusieurs capteurs de déplacement (48, 56, 64, 72) qui se composent respectivement d'un transmetteur de signal (50, 58, 66, 74) fixé à l'une des tringles de changement de vitesse (4, 14, 24, 34) et d'un récepteur de signal (52, 60, 68, 76) disposé de manière fixe dans le boîtier, dans lequel les transmetteurs de signal (50, 58, 66, 74) sont respectivement réalisés sous forme d'aimants permanents, dans lequel les récepteurs de signal (52, 60, 68, 76) sont respectivement réalisés sous forme de capteurs à effet Hall 3D, et dans lequel les récepteurs de signal (52, 60, 68, 76) sont connectés à une unité de commande de boîte de vitesses électronique (44) par l'intermédiaire de lignes de capteurs (54, 62, 70, 78) électriques, dans lequel les transmetteurs de signal (50, 58, 66, 74) sont disposés avec la même orientation axiale de leurs pôles magnétiques (N, S), et dans lequel les récepteurs de signal (52, 60, 68, 76) sont disposés dans un plan (80) horizontal commun dans leur position de montage,
**caractérisé en ce que** les signaux de capteur des récepteurs de signal (52, 60, 68, 76) sont détectés à une cadence temporelle (Δts) fixée et leurs valeurs de signal (xs) actuelles sont mémorisées, **et en ce que** la présence d'un champ parasite magnétique externe est reconnue par le fait que les valeurs de signal (xs) d'au moins deux récepteurs de signal (52, 60, 68, 76) présentent simultanément une variation de valeur de signal, sans qu'un processus de changement de vitesse de la boîte de vitesses n'ait été déclenché.

2. Procédé selon la revendication 1, **caractérisé en ce que,** pour l'évaluation de la variation de valeur de signal de chaque récepteur de signal (52, 60, 68, 76), une valeur moyenne (x_{S_M}) des dernières valeurs de signal (xs) détectées est formée, **en ce qu'**une plage de tolérance intérieure des valeurs de signal (Δx_{S_T}) est définie autour de la valeur moyenne (x_{S_M}) respective, **en ce qu'**une plage de brouillage extérieure des valeurs de signal (Δxs_s) est fixée autour de la valeur moyenne (x_{S_M}) respective, **en ce qu'**une période d'observation (Δt_{B}) contenant le signal de capteur respectivement détecté en dernier est fixée, **en ce que** la largeur de la zone de tolérance (Δx_{S_T}) correspond dans les deux directions respectivement à l'intensité d'un champ parasite magnétique de +/- 4 mT pouvant être tolérée par les récepteurs de signal (52, 60, 68, 76), **en ce que** la largeur de la zone de perturbation (Δxs_s) dans les deux directions à partir de la valeur moyenne (x_{S_M}) correspond respectivement à l'intensité maximale supposée d'un champ parasite magnétique externe de +/- 25 mT, **et en ce que** la période d'observation (Δt_{B}) est définie comme une plage de secondes à un chiffre.

3. Procédé selon la revendication 1 ou 2, **caractérisé en ce qu'**un champ parasite magnétique critique pour un fonctionnement approprié du dispositif de changement de vitesse (2) est considéré comme reconnu lorsqu'aucun processus de changement de vitesse de la boîte de vitesses n'a été déclenché, les signaux de capteur (x_{S1}(t), x_{S2}(t), x_{S3}(t), x_{S4}(t)) de tous les récepteurs de signal (52, 60, 68, 76) ont dépassé ou n'ont pas atteint la plage de tolérance (Δx_{S_T}) au début (t1) et à la fin (t2) de la période d'observation (Δt_{B}), tout en restant dans la plage de brouillage (Δxs_s).

4. Procédé selon la revendication 1 ou 2, **caractérisé en ce qu'**un champ parasite magnétique critique pour un fonctionnement approprié du dispositif de changement de vitesse (2) est considéré comme non reconnu lorsqu'aucun processus de changement de vitesse de la boîte de vitesses n'a été déclenché, les signaux de capteur (x_{S1}(t), x_{S2}(t), x_{S3}(t), x_{S4}(t)) de tous les récepteurs de signal (52, 60, 68, 76) ont dépassé ou n'ont pas atteint la plage de tolérance (Δx_{S_T}) au début (t1) de la période d'observation (Δt_{B}), et sont ensuite restés dans la plage de brouillage (Δxs_s), mais le signal de capteur (x_{S2}(t)) d'au moins un récepteur de signal (60) est revenu dans la plage de tolérance (Δx_{S_T}) pendant la période d'observation (Δt_{B}).

5. Procédé selon la revendication 1 ou 2, **caractérisé en ce qu'**un champ parasite magnétique critique pour un fonctionnement approprié du dispositif de changement de vitesse (2) est considéré comme non reconnu lorsque les signaux de capteur (x_{S1}(t), x_{S2}(t), x_{S3}(t), x_{S4}(t)) de tous les récepteurs de signal (52, 60, 68, 76) ont dépassé ou n'ont pas atteint la plage de tolérance (Δx_{S_T}) au début (t1) de la période d'observation (Δt_{B}), mais le signal de capteur (x_{S2}(t)) d'au moins un récepteur de signal (60) a quitté la plage de brouillage (Δx_{S_S}) en raison d'une demande de changement de vitesse survenue entre-temps pendant la période d'observation (Δt_{B}).

6. Procédé selon l'une des revendications 1 à 5, **caractérisé en ce que,** lors de la reconnaissance d'un champ parasite magnétique d'une intensité de champ élevée par lequel les signaux de capteur des récepteurs de signal (52, 60, 68, 76) pourraient être faussés, la mise à jour des valeurs de signal est réprimée.

7. Procédé selon l'une des revendications 1 à 5, **caractérisé en ce que,** lors de la reconnaissance d'un champ parasite magnétique d'une intensité de champ élevée par lequel les signaux de capteur des récepteurs de signal (52, 60, 68, 76) pourraient être faussés, le changement de vitesse de la boîte de vitesses est empêché.

8. Procédé selon l'une des revendications 1 à 5, **caractérisé en ce que,** lors de la reconnaissance d'un champ parasite magnétique d'une intensité de champ élevée par lequel les signaux de capteur des récepteurs de signal (52, 60, 68, 76) pourraient être faussés, seul le changement de vitesse de la boîte de vitesses (2) est encore autorisé à une vitesse de marche avant déterminée et/ou à une vitesse de marche arrière déterminée, afin de permettre de quitter le champ parasite magnétique, dans lequel ledit changement de vitesse ne fait pas appel aux signaux de capteurs des récepteurs de signal (52, 60, 68, 76), mais la commande de changement de vitesse est effectuée au lieu de cela avec des intervalles de changement de vitesse largement dimensionnés pour un tel changement de vitesse.
